# EUROPÄISCHE PATENTSCHRIFT

(11) **EP 1 410 974 B1**
(45) Veröffentlichungstag und Bekanntmachung des Hinweises auf die Patenterteilung: **16.08.2006**
(21) Anmeldenummer: 03022015.6
(22) Anmeldetag: 01.10.2003
(51) Int. Cl.: B62D 6/10, B62D 15/02

(54) **Einrichtung zum Erfassen einer relativen Drehbewegung in einer Fahrzeug-Lenkeinrichtung**
Device for detecting a relative rotation in a vehicle steering device
Dispositif pour détecter une rotation relative dans un dispositif de direction de véhicule

(30) Priorität: 18.10.2002 DE 10248695; 05.02.2003 DE 10304484
(43) Veröffentlichungstag der Anmeldung: 21.04.2004
(73) Patentinhaber: ZF Lenksysteme GmbH, 73527 Schwäbisch Gmünd (DE)
(72) Erfinder: Abele, Wolfgang, 73565 Spraitbach (DE); Budaker, Martin, 73540 Heubach (DE); Knödler, Helmut, 73547 Lorch (DE); Richter, Peter, 71404 Korb (DE); Heger, Markus, 73525 Schwäbisch Gmünd (DE)

(56) Entgegenhaltungen:
- EP-A- 1 018 466
- DE-A- 19 935 283

## Beschreibung

Die Erfindung betrifft eine Einrichtung nach dem Oberbegriff des Anspruchs 1 oder 2.

Durch die DE 38 03 344 A 1 und die DE 199 35 283 A1 ist eine Einrichtung zur Messung einer Längsbewegung, insbesondere zur Bestimmung eines Lenkdrehmomentes einer Lenkung bekannt, die mit einem kontaktlosen Sensor arbeitet. In einem als Lenkgetriebegehäuse ausgebildeten Gestell, ist dabei eine als Eingangswelle einer Lenkhandhabe ausgebildete Welle drehbar eingesetzt. Auf der Welle ist ein axial verschiebbares Element in Form einer Schubhülse oder eines Ringes angeordnet.

Das axial verschiebbare Element ist mit Hilfe von einer die Drehbewegung der Welle in eine Längsbewegung umformenden getrieblichen Verbindung - etwa einem Gewinde oder einer Schrägführung - mit der Welle verbunden.

Eine Nachweiseinrichtung, die bei dem in der DE 199 35 283 A1 beschriebenen Gegenstand als magnetoresistiver Sensor ausgebildet ist, erfasst die Längsbewegung des axial verschiebbaren Elementes, wobei auf dem axial verschiebbaren Element ein zumindest einen Nordpol und einen Südpol aufweisender Magnet festgelegt ist.

Der Magnet ist als Ringmagnet ausgebildet und kann im Betrieb der Einrichtung geringfügige Taumelbewegungen durchführen, wodurch der magnetoresistive Sensor Fehlmessungen durchführt. Die Taumelbewegungen können ihre Ursache in Ungleichförmigkeiten des Magnetfeldes des Magneten oder in einer toleranzbehafteten Lagerung des Magneten auf der Welle haben.

Der Erfindung liegt die Aufgabe zugrunde, eine Einrichtung zum Erfassen einer relativen Drehbewegung in einer Fahrzeug-Lenkeinrichtung zu schaffen, die unempfindlich gegenüber mechanischen und magnetischen Toleranzen ist.

Die Aufgabe wird mit einer Einrichtung mit den Merkmalen des Anspruchs 1 gelöst.

Dadurch, dass ein Teil der Nachweiseinrichtung - Sensor oder Signalgeber - an einem drehfest, aber axial verschiebbar relativ zu dem Gestell angeordneten Außenring eines Lagers festgelegt ist, wobei der Innenring des Lagers entweder mit dem axial verschiebbaren Element verbunden ist oder direkt auf der Welle als axial verschiebbares Element angeordnet ist, ist sichergestellt, dass die Nachweiseinrichtung in ihrer Messgenauigkeit nicht durch Taumeln eines ihrer Komponenten (Sensor oder Signalgeber) beeinträchtigt ist.

Der Außenring des Lagers ist zu diesem Zweck vorzugsweise mit einem federnden Element, das Längendehnung erlaubt, aber torsionssteif ist, an dem Gestell angebunden. Das Lager kann als Wälzlager, insbesondere als Kugellager ausgebildet sein. Es kann auch zweckmäßig sein, das Lager als Gelenklager auszubilden. Vorteilhaft ist dabei das axial verschiebbare Element ring- oder zylinderförmig um die Welle gebildet. Die getriebliche Verbindung der Welle mit dem axial verschiebbaren Element ist dabei vorzugsweise als Gewinde zwischen der Welle und dem axial verschiebbaren Element ausgebildet.

Um das Gewinde spielfrei zu halten, ist das axial verschiebbare Element in axialer Richtung mit einem Federelement, wie etwa einer Schrauben-Druckfeder vorgespannt. Dabei ist es zweckmäßig, wenn ein Ende der Schraubenfeder in axialer Richtung des axial verschiebbaren Elementes oder Innenringes des Lagers ausgerichtet ist und das axial verschiebbare Element oder den Innenring, ein Axiallager bildend, durchragt. Dadurch ist auf einfache Weise ein spielfreies Axial-Gleitlager des axial verschiebbaren Elementes dargestellt.

Ein Anwendungsbeispiel der Einrichtung ist die Bestimmung eines Lenkdrehmomentes an einer Lenkhandhabe einer vorzugsweise als elektrische Hilfskraft- oder Fremdkraftlenkung ausgebildeten Lenkung. Hierbei kann die Welle als Eingangswelle eines Lenkgetriebes ausgebildet sein und über ein drehelastisches Element wie etwa einem Drehstab mit einer Ausgangswelle verbunden sein. Die relative Verdrehung der Eingangswelle gegenüber der Ausgangswelle, als Maß für das anliegende Lenkmoment wird über eine Nachweiseinrichtung mit einer Auswerteschaltung bestimmt. Zu diesem Zweck wird die Drehbewegung der Eingangswelle über die spielfreie, als vorzugsweise Gewinde zwischen der Welle und dem Innenring des Lagers oder dem axial verschiebbaren Element ausgebildeten getrieblichen Verbindung, in eine Längsbewegung des Innenrings oder axial verschiebbaren Elementes umgesetzt. Der Außenring des Lagers weist einen Magnet oder Magnetring mit mindestens einem Nord- und einem Südpol auf und bewegt sich, axial verschiebbar, aber drehfest am Gestell angebunden, relativ zu einem gestellfesten magnetoresistiven Sensor.

Der magnetoresistive Sensor ist in der Lage, das Lenkdrehmoment mit Hilfe einer Auswerteschaltung zu erfassen und zu bestimmen.

Der magnetoresistive Sensor ist im wesentlichen aus einer oder mehreren mäanderförmigen Leiterbahnen aus ferromagnetischer Nickel-Cobalt-Legierung, die auf einem Siliziumsubstrat aufgedampft und durch eine Silizium-Nitrid-Schutzschicht passiviert ist, gebildet.

Der Widerstand der ferromagnetischen Nickel-Kobalt-Legierung zeigt eine starke Abhängigkeit von einem Magnetfeld, in Bezug auf Drehung des Magnetfeldes als auch in Bezug auf Inhomogenität des Magnetfeldes bei dem angewandten Längenmesssystem. Durch die Anordnung des als Magnetring ausgebildeten Signalgebers auf dem Außenring des Lagers ist der Signalgeber von Taumelbewegungen der Welle entkoppelt. Fehlmessungen des magnetoresistiven Sensors sind damit ausgeschlossen.

Durch die Einrichtung in einer Lenkung kann die relative Verdrehung der Eingangswelle zur Ausgangswelle bestimmt werden und das jeweilige Lenkdrehmoment errechnet werden.

Die Einrichtung zum Erfassen einer relativen Drehbewegung in einer Fahrzeug-Lenkeinrichtung lässt sich auch zur Bestimmung einer Zahnstangenstellung einsetzen indem vorzugsweise das axial verschiebbare Element auf einer Lenkmutter angeordnet ist, die sich um eine Zahnstange / Gewindestange wälzt. Das axial verschiebbare Element ist dabei drehfest aber axial verschiebbar im Gehäuse gelagert.

Die Trennebene zwischen den Nord- und Südpolen des Magnetringes kann senkrecht zur Längsachse des axial verschiebbaren Elementes als auch schräg zu der Längsachse des axial verschiebbaren Elementes angeordnet sein. Durch eine schräge Anordnung der Trennebene zwischen dem Nordpol und dem Südpol verlängert sich die Länge des Messbereiches.

Ein Ausführungsbeispiel der Erfindung ist nachfolgend anhand der Zeichnung gezeigt. In der Zeichnung zeigt:
- Fig. 1: einen schematischen Längsschnitt einer Einrichtung zum Erfassen einer relativen Drehbewegung in einem Lenkgetriebe,
- Fig. 2: eine Ansicht der Einrichtung in Fig. 1 in Pfeilrichtung X,
- Fig. 3: einen schematischen Längsschnitt einer Einrichtung zum Erfassen einer relativen Drehbewegung in einer Fahrzeug-Lenkeinrichtung,
- Fig. 4: eine schematische Ansicht der Anordnung eines Magneten in einer Einrichtung zum Erfassen einer Drehbewegung in einer Fahrzeug-Lenkeinrichtung,
- Fig 5: einen schematischen Längsschnitt einer Einrichtung zum Erfassen einer Drehbewegung zur Bestimmung eines aktuellen Lenkwinkels.

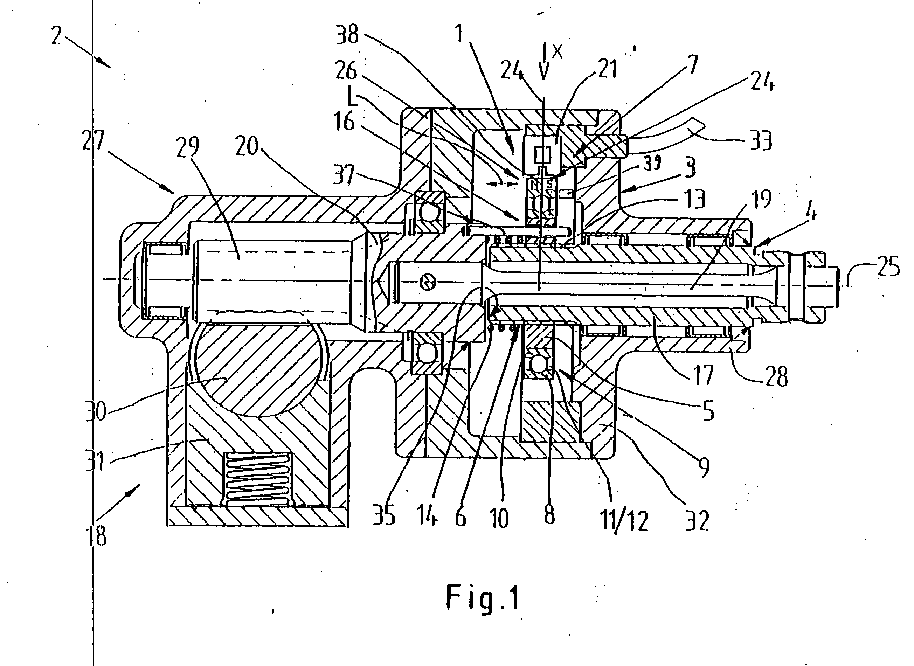

In Fig. 1 ist in einem schematischen Längsschnitt durch ein Lenkgetriebe 27 einer als Zahnstangenlenkung ausgebildeten Lenkung 2 eine Einrichtung zum Erfassen einer relativen Drehbewegung in einer Fahrzeug-Lenkeinrichtung gezeigt.

In einem als Gehäuse 28 ausgebildeten Gestell 3 ist eine als Eingangswelle 17 ausgebildete Welle 4 drehbar gelagert. Die Eingangswelle 17 ist über ein drehelastisches Element 19 mit einer Ausgangswelle 20 verbunden. An der Eingangswelle 17 ist eine nicht dargestellte Lenkhandhabe festgelegt, die Ausgangswelle 20 ist drehfest mit einem Ritzel 29 verbunden, das mit einer Zahnstange 30 kämmt. Die Zahnstange 30 steht gelenkig mit Spurstangen und Radlenkhebeln mit lenkbaren Rädern eines Fahrzeugs in Verbindung. Zur Spielfreistellung der Verzahnung zwischen Zahnstange 30 und Ritzel 29 ist in dem Gehäuse 28 in bekannter Weise ein Druckstück 31 angeordnet, das auf die Zahnstange 30 wirkt.

Wie die Figuren 1, 2 und 3 zeigen, ist in dem Gehäuse 28 im axialen Erstreckungsbereich der Eingangswelle 17 benachbart zu einem Gehäusedeckel 32 die Einrichtung 1 zum Erfassen einer relativen Drehbewegung in einer Fahrzeug-Lenkeinrichtung angeordnet.

An dem Gehäusedeckel 32 ist zu diesem Zweck ein Durchbruch zur Durchführung einer Kabelverbindung 33 zwischen einem magnetoresistiven Sensor 21 und einer nicht dargestellten Steuer- und / oder Regelungseinrichtung der Lenkung 2 eingebracht.
Der magnetoresistive Sensor 21 ist gehäusefest in radialem Abstand zu der Eingangswelle 17 angeordnet.

Durch ein auf die Lenkhandhabe aufgebrachtes Lenkmoment wird die Eingangswelle 17 relativ zu der Ausgangswelle 20 verdreht. Diese Relativbewegung, die ein Maß für das Lenkmoment ist, wird über eine getriebliche Verbindung 6 zwischen der Eingangswelle 17 und einem auf der Eingangswelle 17 angeordneten ringförmigen, axial verschiebbaren Element 5 in eine Längsbewegung in Pfeilrichtung L umgesetzt. Die getriebliche Verbindung 6 ist in den in den Figuren 1 bis 3 gezeigten Ausführungsbeispielen als Gewinde 13 ausgebildet. Das axial verschiebbare Element 5 ist in Figur 1 als hülsen- oder ringförmiges Bauteil ausgebildet, auf das drehfest eine Innenschale oder Innenring 10 eines als Wälzlager 11 ausgebildeten Lagers 9 festgelegt ist.

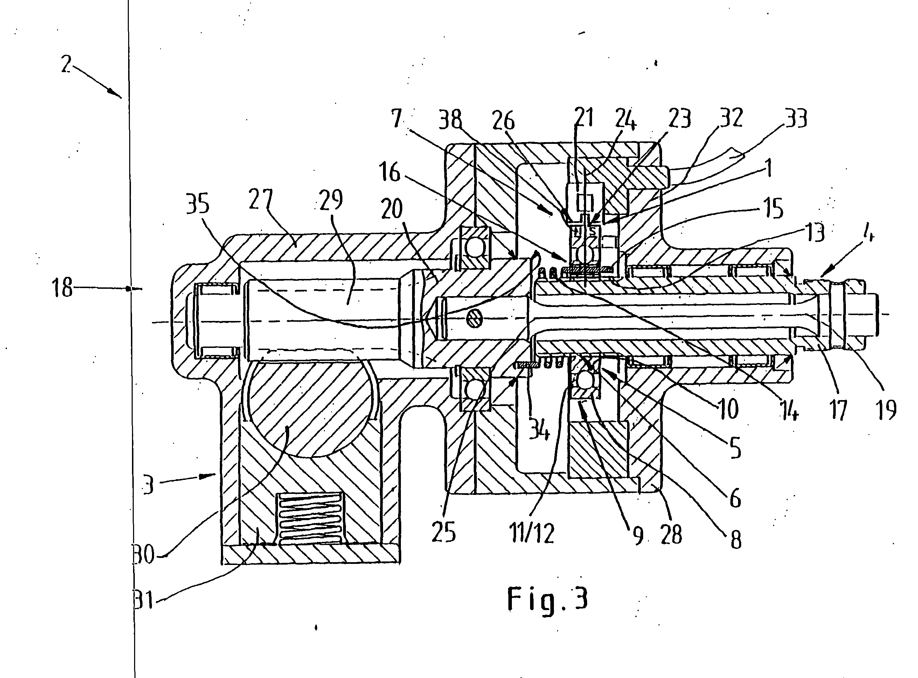

In dem in Fig. 3 dargestellten Ausführungsbeispiel ist das axial verschiebbare Element 5 als Innenring 10 des Lagers 9 ausgebildet.

Das Lager 9 kann als Wälzlager in Form eines Kugel- oder Pendelkugellagers 12 ausgebildet sein. Es kann auch in vereinfachter Bauweise als Gelenklager ausgebildet sein.

Zur Spielfreistellung des Gewindes 13 ist das axial verschiebbare Element 5 mit Hilfe einer Schraubenfeder 14 vorgespannt, wobei sich die Schraubenfeder 14 zwischen der Ausgangswelle 20 und dem axial verschiebbaren Element 5 oder dem Innenring 10 abstützt. Dabei greift ein Ende 34 (vgl. Fig. 3) der Schraubenfeder 14 in eine Stirnfläche 35 der Ausgangswelle 20, während das andere Ende 15 der Schraubenfeder 14 als verlängerter Fortsatz in axialer Richtung der Längsachse 25 des axial verschiebbaren Elementes 5 dieses gleitbar, spielfrei durchragt.

Die Schraubenfeder 14 bildet somit auch ein Führungselement für das axial verschiebbare Element 5 und zusammen mit diesem eine Axialführung.

In Fig. 1 ist zwischen der Stirnfläche 35 der Ausgangswelle 20 und dem axial verschiebbaren Element 5 ein Führungsbolzen 37 so angeordnet, dass er das axial verschiebbare Element 5 durchragt und eine Führung für dieses bildet.

Ein Außenring 8 des um das axial verschiebbare Element 5 radial angeordneten Lagers 9 trägt einen mindestens einen Nordpol und Südpol aufweisenden Magneten 38. Der Magnet 38 bildet einen Signalgeber 26 und mit dem magnetoresistiven Sensor 21 eine Nachweiseinrichtung 7 zur Messung der Längsbewegung des axial verschiebbaren Elements 5.

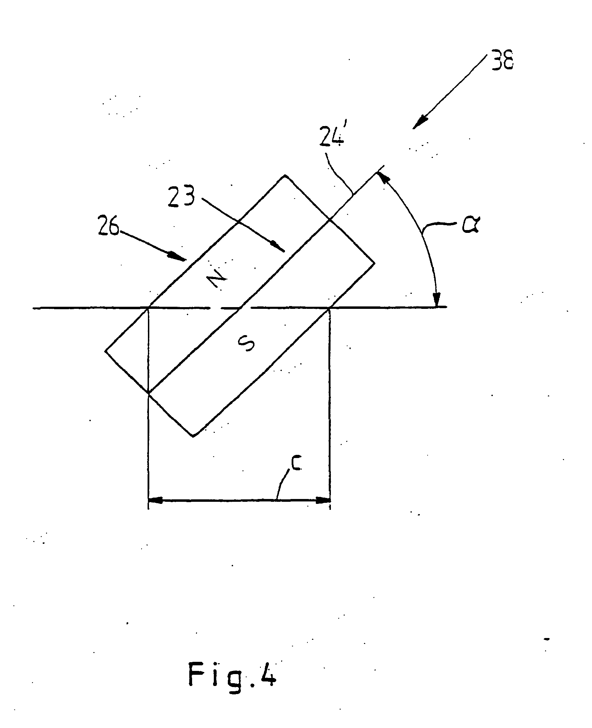

Die Nord- und Südpole sind in axialer Richtung der Längsachse 25 so angeordnet, dass in deren Übergangsbereich 23 eine Ebene 24 als Trennebene der Pole gebildet ist, die senkrecht zur Längsachse 25 des axial verschiebbaren Elementes 5 ausgerichtet ist. Zur Verlängerung der mit einem Polpaar möglichen Messstrecke c kann es zweckmäßig sein, die Ebene 24 als schräge Ebene 24' mit einem Winkel α schräg zu der Längsachse 25 anzuordnen (vgl. Fig. 4).

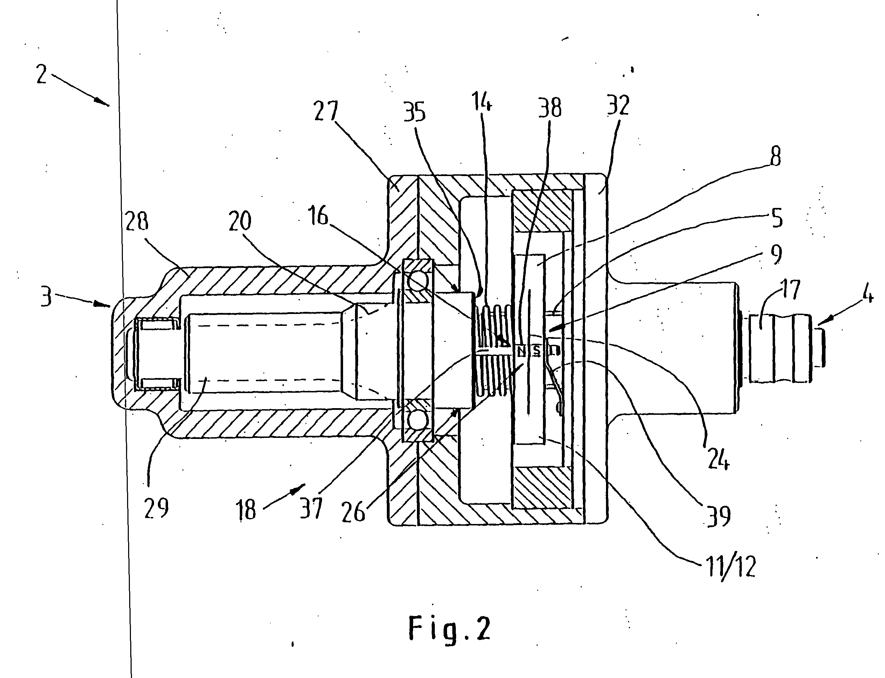

Damit der Außenring 8 des Lagers 9 lediglich eine von Taumel- und Wankbewegungen des axial verschiebbaren Elementes 5 und / oder des Innenringes 10 freie axiale Bewegung durchführt, ist dieser durch Wälzkörper entkoppelt und mit einer Blattfeder 39 (vgl. Fig. 2) oder einem anderen elastischen, aber torsionssteifen Verbindungselement an dem Gestell 3 oder Gehäuse 28 festgelegt.

Durch die Längsbewegung des Magneten 38 oder Signalgebers 26 wird der magnetoresistive Sensor 21 durch die Feldlinien des Magneten variierend durchflutet und ein Signal - planare Hallspannung oder Widerstandsänderung - in dem Sensor 21 generiert. Das Signal wird von der Steuerungs- und / oder Regelungseinheit der als elektrische Lenkung 18 ausgebildeten Lenkung 2 ausgewertet und zur Ansteuerung eines auf die Zahnstange 30 wirkenden Servomotors herangezogen.

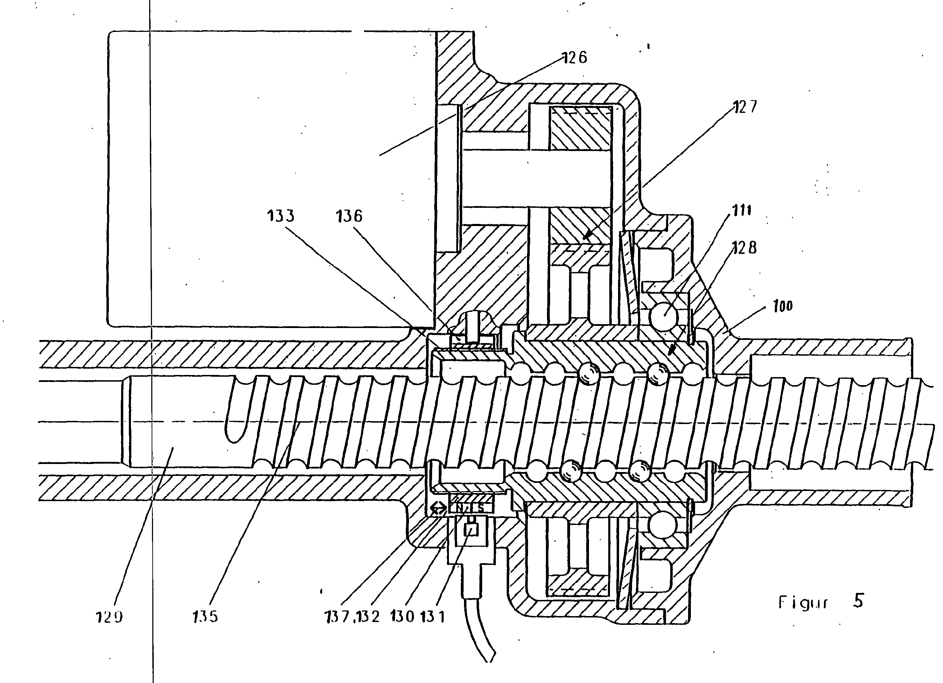

Es kann auch zweckmäßig sein, die Einrichtung zum Erfassen einer (relativen) Drehbewegung in einer Fahrzeug-Lenkeinrichtung zur Bestimmung einer Zahnstangenstellung und einem daraus resultierenden Lenkwinkel zu verwenden. Hierfür ist Figur 5 ein Beispiel:
Ein Motor 126 treibt über ein Getriebe 127 und ein Kugelgewinde 128 eine Schubstange 129 an. Diese ist längsverschiebbar gelagert und gegen Verdrehung gesichert. Ein Magnet 130 als Signalgeber und eine Erfassungseinheit (Sensor) 131 entsprechen der Ausführung in Figur 1.
Der Magnet 130 ist drehfest mit einem ringförmigen Element verbunden, das als Gewindeteil 132 ausgebildet ist. Dieses Gewindeteil 132 schraubt sich über das Gewinde 133 entlang einer vorgegebenen Achse 135 und führt - bedingt durch die Führung 136 - eine definierte Längsbewegung (Pfeile 137) aus. Die Erfassung und Auswertung dieser Längsbewegung erfolgt wie bei Figur 1.

### BEZUGSZEICHENLISTE

| | | | |
|---|---|---|---|
| 1 | Vorrichtung | 26 | Signalgeber |
| 2 | Lenkung | 27 | Lenkgetriebe |
| 3 | Gestell | 28 | Gehäuse |
| 4 | Welle | 29 | Ritzel |
| 5 | Element, axial verschiebbar | 30 | Zahnstange |
| 6 | Getriebliche Verbindung | 31 | Druckstück |
| 7 | Nachweiseinrichtung | 32 | Gehäusedeckel |
| 8 | Außenring | 33 | Kabelverbindung |
| 9 | Lager | 34 | Ende v. 14 in 20 |
| 10 | Innenring | 35 | Stirnfläche v. 20 |
| 11 | Wälzlager | 36 | |
| 12 | Kugellager, Pendelkugellager | 37 | Führungsbolzen |
| 13 | Gewinde | 38 | Magnet |
| 14 | Schraubenfeder | 39 | Blattfeder |
| 15 | Ende | 40 | |
| 16 | Axiallager | | |
| 17 | Eingangswelle | 100 | Gehäuse |
| 18 | Lenkung, elektrisch | 111 | Wälzkörper |
| 19 | Drehelastisches Element | 126 | Motor |
| 20 | Ausgangswelle | 127 | Getriebe |
| 21 | Sensor, magnetoresistiv | 128 | Kugelgewinde/Welle |
| 22 | | 129 | Schubstange |
| 23 | Übergangsbereich | 130 | Signalgeber/Magnet |
| 24,24' | Ebene | 131 | Sensor |
| 25 | Längsachse | 132 | (zweites) Gewindeteil |
| | | 133 | Gewinde |
| | | | |
| | | 135 | Achse |
| | | 136 | Führung |
| | | 137 | Pfeile |
| | | | |
| α | Winkel | | |
| L | Pfeil | | |
| c | Messstrecke | | |

## Patentansprüche

1. Einrichtung zum Erfassen einer relativen Drehbewegung in einer Fahrzeug-Lenkeinrichtung mit einer antreibbaren Welle (4, 128), mit folgenden Merkmalen:
- ein Schraubengetriebe (13, 5; 133, 132) ist vorgesehen zur Umwandlung der Drehbewegung der Welle (4,128) in eine Bewegung eines Signalgebers (26; 130), die eine Linearkomponente aufweist,
- der Signalgeber (26) ist wie auf der Mantelfläche eines Kreiszylinders geführt, dessen Achse parallel zur Achse der Welle (4, 128) verläuft,
- dem Signalgeber (26) ist ein gehäusefester Sensor (21; 131) zugeordnet,
- ein erstes Gewindeteil (13, 5; 128) des Schraubengetriebes (13, 5; 133, 132) ist gegenüber dem Gehäuse (28; 100) so gut wie starr in Axialrichtung, aber drehbar durch Wälzkörper (11, 111) gelagert,
- das zweite Gewindeteil (5, 13; 132) des Schraubengetriebes (13, 5; 133, 132) ist gegenüber dem ersten Gewindeteil (13, 5, 128) drehbeweglich, aber in Axialrichtung geführt,
**dadurch gekennzeichnet, dass**
der Signalgeber (26; 130) gegenüber dem gehäusefesten Sensor (21; 131) drehstarr gehalten ist.

2. Einrichtung zum Erfassen einer relativen Drehbewegung in einer Fahrzeug-Lenkeinrichtung, insbesondere nach Anspruch 1, mit einer in einem Gestell (3) drehbar gelagerten Welle (4), auf der ein in Richtung der Welle (4) axial verschiebbares Element (5) angeordnet ist, das über eine, die Drehbewegung der Welle (4) in eine Längsbewegung umformende getriebliche Verbindung (6) mit der Welle (4) verbunden ist, und mit einer die Längsbewegung des axial verschiebbaren Elementes (5) erfassenden Nachweiseinrichtung (7),
**dadurch gekennzeichnet, dass** ein Sensor (21) oder Signalgeber (26) der Nachweiseinrichtung (7) an einem drehfest mit dem Gestell (3) verbundenen Außenring (8) eines Lagers (9) festgelegt ist und der Außenring (8) mit dem axial verschiebbaren Element (5) des Lagers (9) axial verschiebbar angeordnet ist.

3. Einrichtung nach Anspruch 2, **dadurch gekennzeichnet, dass** das Lager (9) ein Wälzlager (11) ist.

4. Einrichtung nach Anspruch 3, **dadurch gekennzeichnet, dass** das Wälzlager (11) als Kugel- oder Pendelkugellager (12) ausgebildet ist.

5. Einrichtung nach Anspruch 2, **dadurch gekennzeichnet, dass** das Lager (9) als Gelenklager ausgebildet ist.

6. Einrichtung nach einem der Ansprüche 2 bis 5, **dadurch gekennzeichnet, dass** das axial verschiebbare Element (5) ring- oder zylinderförmig um die Welle (4) gebildet ist und die getriebliche Verbindung (6) ein Gewinde (13) zwischen der Welle (4) und dem axial verschiebbaren Element (5) ist.

7. Einrichtung nach Anspruch 6, **dadurch gekennzeichnet, dass** das axial verschiebbare Element (5) ein Innenring (10) des Lagers (9) ist.

8. Einrichtung nach einem der Ansprüche 2 bis 7, **dadurch gekennzeichnet, dass** das axial verschiebbare Element (5) axial vorgespannt ist.

9. Einrichtung nach Anspruch 8, **dadurch gekennzeichnet, dass** das axial verschiebbare Element (5) mit einer Schraubenfeder (14) vorgespannt ist, wobei ein Ende (15) der Schraubenfeder (14) den Innenring (10) des Lagers (9) oder das axial verschiebbare Element (5), ein Axiallager (16) bildend, durchragt.

10. Einrichtung nach einem der Ansprüche 2 bis 9, **dadurch gekennzeichnet, dass** die Welle (4) eine Eingangswelle (17) einer elektrisch unterstützten Lenkung (18) ist, wobei die Eingangswelle (17) mit einem drehelastischen Element (19) mit einer Ausgangswelle (20) verbunden ist und die getriebliche Verbindung (6) des axial verschiebbaren Elementes (5) mit der Eingangswelle (17) die begrenzte Verdrehung zwischen der Eingangswelle (17) und der Ausgangswelle (20) in eine proportionale Längsbewegung umwandelt und die Längsbewegung auf den zumindest einen Nordpol und einen Südpol aufweisenden Außenring (8) des Lagers (9) überträgt und über einen zugeordneten mangetoresistiven Sensor (21) die relative Lage der Eingangswelle (17) zu der Ausgangswelle (20) erfasst ist.

11. Einrichtung nach einem der Anspruche 2 bis 9, **dadurch gekennzeichnet, dass** das axial verschiebbare Element (132) auf einer als Lenkmutter ausgebildeten Welle (128) angeordnet ist und die Längsbewegung der Zahnstange (129) erfasst.

12. Einrichtung nach Anspruch 10, **dadurch gekennzeichnet, dass** ein Übergangsbereich (23) zwischen Nord- und Südpol in einer Ebene (24) liegt, die senkrecht zur Längsachse (25) des axial verschiebbaren Elementes (5) verläuft.

13. Einrichtung nach Anspruch 10, **dadurch gekennzeichnet, dass** der Übergangsbereich (23) zwischen Nord- und Südpol in einer Ebene (24') liegt, die schräg mit einem Winkel α zu der Längsachse (25) des axial verschiebbaren Elementes (5) verläuft.

## Claims

1. Device for detecting a relative rotary motion in a vehicle steering device comprising a driven shaft (4, 128), having the following features:
- a screw mechanism (13, 5; 133, 132) is provided for converting the rotary motion of the shaft (4, 128) into a motion of a signal generator (26; 130) having a linear component,
- the signal generator (26) is carried on the circumferential surface of a circular cylinder, the axis of which runs parallel to the axis of the shaft (4, 128),
- a sensor (21; 131) fixed to the housing is assigned to the signal generator (26),
- a first threaded section (13, 5; 128) of the screw mechanism (13, 5; 133, 132) is supported in relation to the housing (28; 100) so that it is virtually rigid in an axial direction but is rotatable by means of rolling elements (11, 111),
- the second threaded section (5, 13; 132) of the screw mechanism (13, 5; 133, 132) is rotatable in relation to the first threaded section (13, 5; 128) but is guided in an axial direction,
**characterized in that**
the signal generator (26; 130) is held rotationally locked in relation to the sensor (21; 131) fixed to the housing.

2. Device for detecting a relative rotary motion in a vehicle steering device, especially one according to Claim 1, comprising a shaft (4) which is rotatably supported in a frame (3) and on which an element (5) is arranged, which is axially displaceable in the direction of the shaft (4) and which is connected to the shaft (4) by way of a kinematic connection (6) converting the rotary motion of the shaft (4) into a longitudinal motion, and comprising a detection device (7) registering the longitudinal motion of the axially displaceable element (5),
**characterized in that** a sensor (21) or signal generator (26) of the detection device (7) is fixed to an outer race (8) of a bearing (9) rotationally locked to the frame (3), the outer race (8) being axially displaceable together with the axially displaceable element (5) of the bearing (9).

3. Device according to Claim 2, **characterized in that** the bearing (9) is a roller bearing (11).

4. Device according to Claim 3, **characterized in that** the roller bearing (11) takes the form of a ball bearing or self-aligning ball bearing (12).

5. Device according to Claim 2, **characterized in that** the bearing (9) takes the form of an articulated bearing.

6. Device according to any one of Claims 2 to 5, **characterized in that** the axially displaceable element (5) is of an annular or cylindrical shape formed around the shaft (4) and the kinematic connection (6) is a thread (13) between the shaft (4) and the axially displaceable element (5).

7. Device according to Claim 6, **characterized in that** the axially displaceable element (5) is an inner race (10) of the bearing (9).

8. Device according to any one of Claims 2 to 7, **characterized in that** the axially displaceable element (5) is axially preloaded.

9. Device according to Claim 8, **characterized in that** the axially displaceable element (5) is preloaded by means of a helical coil spring (14), one end (15) of the helical coil spring (14) extending through the inner race (10) of the bearing (9) or the axially displaceable element (5), forming an axial bearing (16).

10. Device according to any one of Claims 2 to 9, **characterized in that** the shaft (4) is an input shaft (17) of an electrically assisted steering (18), the input shaft (17) being connected to an output shaft (20) by a torsionally elastic element (19) and the kinematic connection (6) of the axially displaceable element (5) to the input shaft (17) translating the limited rotation between the input shaft (17) and the output shaft (20) into a proportional longitudinal motion, and the longitudinal motion being transmitted to the outer race (8) of the bearing (9) having at least a north pole and a south pole, and the position of the input shaft (17) relative to the output shaft (20) being detected by an associated magnetoresistive sensor (21).

11. Device according to any one of Claims 2 to 9, **characterized in that** the axially displaceable element (132) is arranged on a shaft (128) in the form of a steering nut and detects the longitudinal motion of the rack (129).

12. Device according to Claim 10, **characterized in that** a transitional area (23) is situated between the north pole and the south pole in a plane (24), which runs perpendicular to the longitudinal axis (25) of the axially displaceable element (5).

13. Device according to Claim 10, **characterized in that** the transitional area (23) between the north pole and the south pole lies in a plane (24'), which runs obliquely at an angle α to the longitudinal axis (25) of the axially displaceable element (5).

## Revendications

1. Dispositif pour détecter un mouvement de rotation relatif dans un système de direction de véhicule comprenant un arbre entraînable (4, 128) ayant les caractéristiques suivantes :
- une transmission à vis (13, 5 ; 133, 132) est prévue pour convertir le mouvement rotatif de l'arbre (4, 128) en un mouvement d'un générateur de signal (26 ; 130) qui présente une composante linéaire,
- le générateur de signal (26) est amené comme sur la surface d'enveloppe d'un cylindre circulaire dont l'axe s'étend parallèlement à l'axe de l'arbre (4, 128),
- un capteur (21 ; 131) fixe sur le boîtier est associé au générateur de signal (26),
- une première pièce coudée (13, 5 ; 128) de la transmission à vis (13, 5 ; 133, 132) est logée de manière aussi rigide que possible dans le sens axial par rapport au boîtier (28; 100), mais de manière à pouvoir tourner grâce à des organes de roulement (11, 111),
- la deuxième pièce coudée (5, 13 ; 132) de la transmission à vis (13, 5 ; 133, 132) peut tourner par rapport à la première pièce coudée (13, 5 ; 128), mais guidée dans le sens axial,
**caractérisé en ce que** le générateur de signal (26 ; 130) est maintenu de manière à ne pas pouvoir effectuer de rotation par rapport au capteur (21 ; 131) fixe sur le boîtier.

2. Dispositif pour détecter un mouvement de rotation relatif dans un système de direction de véhicule, notamment selon la revendication 1, comprenant un arbre (4) logé de manière à pouvoir tourner dans un bâti (3), sur lequel est disposé un élément coulissant dans le sens axial (5) en direction de l'arbre (4), lequel est relié avec l'arbre (4) par le biais d'une liaison engrenée (6) qui convertit le mouvement rotatif de l'arbre (4) en un mouvement longitudinal, et comprenant un dispositif d'identification (7) qui détecte le mouvement longitudinal de l'élément coulissant dans le sens axial (5), **caractérisé en ce qu'**un capteur (21) ou un générateur de signal (26) du dispositif d'identification (7) est fixé à une bague extérieure (8) d'un palier (9) reliée avec le bâti (3) de manière à ne pas pouvoir tourner et la bague extérieure (8) est disposée de manière à pouvoir coulisser dans le sens axial avec l'élément coulissant dans le sens axial (5) du palier (9).

3. Dispositif selon la revendication 2, **caractérisé en ce que** le palier (9) est un palier à roulement (11).

4. Dispositif selon la revendication 3, **caractérisé en ce que** le palier à roulement (11) est réalisé sous la forme d'un roulement à billes ou à rotule sur billes (12).

5. Dispositif selon la revendication 2, **caractérisé en ce que** le palier (9) est réalisé sous la forme d'une articulation à rotule.

6. Dispositif selon l'une des revendications 2 à 5, **caractérisé en ce que** l'élément coulissant dans le sens axial (5) est réalisé en forme annulaire ou cylindrique autour de l'arbre (4) et la liaison engrenée (6) est un filet (13) entre l'arbre (4) et l'élément coulissant dans le sens axial (5).

7. Dispositif selon la revendication 6, **caractérisé en ce que** l'élément coulissant dans le sens axial (5) est une bague intérieure (10) du palier (9).

8. Dispositif selon l'une des revendications 2 à 7, **caractérisé en ce que** l'élément coulissant dans le sens axial (5) est précontraint dans le sens axial.

9. Dispositif selon la revendication 8, **caractérisé en ce que** l'élément coulissant dans le sens axial (5) est précontraint avec un ressort hélicoïdal (14), une extrémité (15) du ressort hélicoïdal (14) traversant la bague intérieure (10) du palier (9) ou l'élément coulissant dans le sens axial (5) en formant un palier axial (16).

10. Dispositif selon l'une des revendications 2 à 9, **caractérisé en ce que** l'arbre (4) est un arbre d'entrée (17) d'une direction à assistance électrique (18), l'arbre d'entrée (17) étant relié par un élément à élasticité rotative (19) avec un arbre de sortie (20) et la liaison engrenée (6) de l'élément coulissant dans le sens axial (5) avec l'arbre d'entrée (17) convertissant la rotation limitée entre l'arbre d'entrée (17) et l'arbre de sortie (20) en un mouvement longitudinal proportionnel et le mouvement longitudinal étant transmis sur la bague extérieure (8) du palier (9) présentant au moins un pôle nord et un pôle sud et la position relative de l'arbre d'entrée (17) par rapport à l'arbre de sortie (20) étant détectée par le biais d'un capteur magnétorésistif (21) associé.

11. Dispositif selon l'une des revendications 2 à 9, **caractérisé en ce que** l'élément coulissant dans le sens axial (132) est disposé sur un arbre (128) réalisé sous la forme d'un écrou de direction et détecte le mouvement longitudinal de la crémaillère (129).

12. Dispositif selon la revendication 10, **caractérisé en ce qu'**une zone de transition (23) entre le pôle nord et le pôle sud se trouve dans un plan (24) qui est perpendiculaire à l'axe longitudinal (25) de l'élément coulissant dans le sens axial (5).

13. Dispositif selon la revendication 10, **caractérisé en ce que** la zone de transition (23) entre le pôle nord et le pôle sud se trouve dans un plan (24') qui est en biais avec un angle α par rapport à l'axe longitudinal (25) de l'élément coulissant dans le sens axial (5).
